# EUROPEAN PATENT APPLICATION

(11) **EP 1 832 497 A2**
(43) Date of publication of application: **12.09.2007**
(21) Application number: 07003841.9
(22) Date of filing: 26.02.2007
(51) Int. Cl.: B62D 3/12

(54) **Apparatus for automatically compensating for clearance of support yoke in rack-and-pinion steering system**

(30) Priority: 08.03.2006 KR 20060021897
(71) Applicant: Mando Corporation, Poseung-myeon Pyeongtaek-si, Gyeonggu-do (KR)
(72) Inventor: Song, Joon Kyu, Seongnam Si Bundang-gu, Gyeonggi-Do (KR); Jo, Hee Gwon, Gunpo-Si Gyeonggi-Do (KR)
(74) Representative: Winkler, Andreas Fritz Ernst

(57) **Abstract**

Disclosed is an apparatus (300) for automatically compensating for the clearance of a support yoke (310) in a rack-and-pinion steering system by using a torsion spring (370) and a cam mechanism so that, when the support yoke (310) generates a clearance, it is automatically compensated for without separate adjustment. Unlike conventional apparatuses for reducing rattle noise resulting from the increased gap between the yoke plug (360) and the support yoke (310), the disclosed apparatus maintains a constant gap. In addition, the first cam (330), the second cam (350), and the torque spring (370) automatically compensate for the clearance of the support yoke (310).

## Description

### FIELD OF THE INVENTION

The present invention relates to an apparatus for automatically compensating for the clearance of a support yoke in a rack-and-pinion steering system. More particularly, the present invention relates to an apparatus for automatically compensating for the clearance of a support yoke in a rack-and-pinion steering system by using a torsion spring and a cam mechanism so that, when the support yoke generates a clearance, it is automatically compensated without separate adjustment.

### BACKGROUND OF THE INVENTION

As generally known in the art, a steering system enables a driver to steer his/her automobile in a desired direction by modifying the center of rotation of the front wheels.

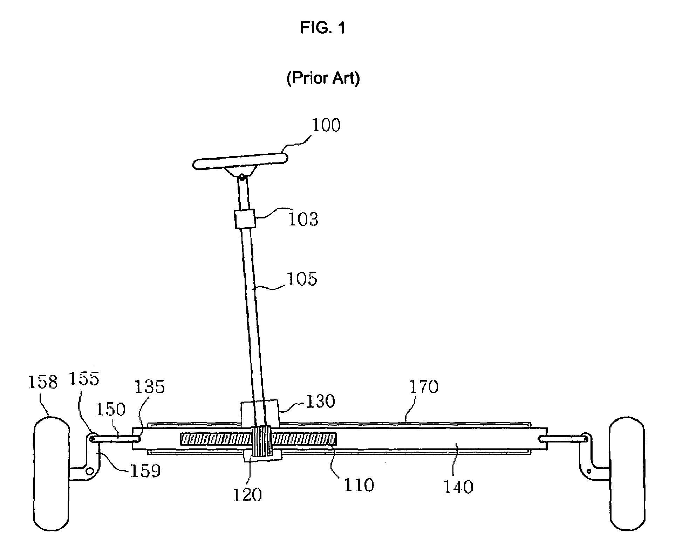

FIG. 1 shows the brief construction of a conventional automobile steering system.

Referring to FIG. 1, the conventional steering system includes a steering wheel 100 positioned in the passenger compartment; a steering shaft 105 connected to the steering wheel 100; a steering column 103 for fixing the steering shaft 105 to the chassis; a gearbox 130 incorporating a rack gear 110 and a pinion gear 120 so as to convert rotational force, which is inputted from the steering shaft 105, into a linear movement; a rack bar 140 having inner ball joints 135 on both ends; tie rods 150 integrally formed with balls of the inner ball joints 135, respectively; and outer ball joints 155 positioned on respective ends of the tie rods 150.

In the case of a rack-and-pinion steering system, the inner ball joints 135 are positioned on the left and right ends of the rack bar 140, which is provided with the rack gear 110. The inner ball joints 135 are connected to the tie rods 150, which are connected to the outer ball joints 155 for connection to knuckles 159 of tires 158.

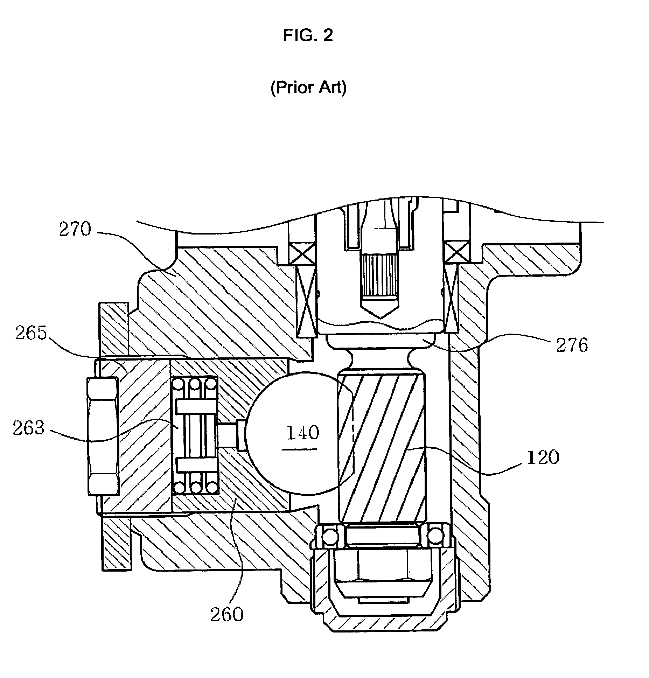

FIG. 2 is a lateral sectional view of a conventional rack-and-pinion gearbox.

The conventional rack-and-pinion gearbox 130 includes a pinion shaft 276; a rack bar 140; a support yoke 260; a spring 263; a yoke plug 265; and a rack housing 270. As mentioned above, the gearbox 130 converts rotational force, which is inputted from the steering shaft 105, into a linear movement.

The pinion shaft 276 receives rotational force from an input shaft 275, which is connected to the steering shaft 105, and transmits the force to the rack bar 140. The pinion shaft 276 is connected to the input shaft 275 via a torsion bar 273. The pinion shaft 276 has a pinion gear 120 formed on its end so as to mesh with the rack gear 110.

The rack bar 140, meshing with the pinion shaft 276, converts rotational force into a linear movement. The rack bar 140 extends across the front wheels of the automobile. The rack bar 140 has ball joints 135 on both ends and a rack gear 110 formed between both ball joints 135 so as to mesh with the pinion shaft 276.

The support yoke 260 reduces the clearance between the rack bar 140 and the pinion shaft 276 for proper power transmission. The support yoke 260 lies opposite the rear surface of the rack bar 140, on which the rack gear 110 is formed. The support yoke 260 is inserted into a rack housing 270, which has a cylinder 170 formed thereon, so as to move forwards/backwards.

The support yoke 260 has a cylindrical shape so as to slide forwards/backwards in the cylinder of the rack housing 270. The support yoke 260 has a semi-circular recess formed on its front portion, which abuts the rack bar 140, so that the support yoke 260 can be forced against the rear surface of the rack bar 110.

In order to guarantee that the rack bar 110 and the pinion shaft 276 are forced against each other for efficient power transmission, the spring 263 is positioned behind the support yoke 110 and exerts constant pressure on the support yoke 260 so that the clearance between the rack bar 140 and the pinion shaft 276 is compensated for.

As such, the support yoke 260 undergoes sliding friction with the rear surface of the rack bar 140. In order to prevent the friction from wearing down the rack bar 140 or generating noise, the support yoke 260 is conventionally made of plastic, which is more flexible than the rack bar 140.

The spring 263 applies pressure so that the support yoke 260 and the rack bar 140 are forced against each other. A coil spring is commonly used as the spring 263, and a yoke plug 265 is positioned on the rear surface of the spring 263 to support it.

The yoke plug 265 supports the spring 263 so that pressure is applied to the support yoke 260. The yoke plug 265 generally has a male thread formed thereon so that it can be coupled to the rack housing 270, which has a female thread formed thereon. The yoke plug 260 has a recess formed on its rear surface so that a wrench can be inserted therein. The yoke plug 265 may be fastened by the wrench when the yoke plug 265 is coupled or when a clearance is generated between the rack bar 140 and the pinion shaft 276, so that the tension of the spring 263 can be adjusted.

According to such a conventional structure, which compensates for the clearance between the rack bar 140 and the pinion shaft 276 by simply applying pressure to the support yoke 260 with the spring 263, a gap of about 0.05 mm is maintained between the yoke plug 265 and the support yoke 260. However, after a long period of use, the support yoke 260 approaches the rack bar 140, and the gap between the yoke plug 265 and the support yoke 260 increases. If the gap is over 0.15 mm, the resulting vibration causes noise.

In order to avoid such noise resulting from vibration, the yoke plug 265 must be readjusted manually, and, not infrequently, the entire steering system has to be replaced during repair. Therefore, it is requested to provide an apparatus for automatically compensating for the clearance without separate adjustment.

### SUBMRY OF THE INVENTION

Accordingly, the present invention has been made to solve the above-mentioned problems occurring in the prior art, and an object of the present invention is to provide an apparatus for automatically compensating for the clearance of a support yoke in a rack-and-pinion steering system by using a torsion spring and a cam mechanism so that, when the support yoke generates a clearance, it is automatically compensated for without separate adjustment.

In order to accomplish this object, there is provided an apparatus for automatically compensating for a clearance of a support yoke in a rack-and-pinion steering system, the apparatus including a support yoke having a fixing recess; a yoke spring for applying pressure to the support yoke towards a rack bar; a first cam positioned on a rear surface of the support yoke so as to support the yoke spring, the fist cam having a first slanted surface formed on a surface opposite the yoke spring in a circumferential direction; a fixing member mounted in the fixing recess so as to maintain a constant gap between the support yoke and the first cam while the yoke spring is inserted between the support yoke and the first cam; a second cam for supporting the first cam, the second cam having a second slanted surface matching the first slanted surface, the second cam having a first recess formed on a central portion of a rear surface of the second slanted surface; a yoke plug for supporting the second cam, the yoke plug having a second recess formed on a central portion of a surface supporting the second cam; and a torsion spring positioned in a space defined by the first and second recesses, wherein the torsion spring is adapted to extend, when the support yoke has generated a clearance, so that resulting rotation of the second cam and relative movement between the first and second cams compensate for the clearance.

### BRIEF DESCRIPTION OF THE DRAWINGS

The above and other objects, features and advantages of the present invention will be more apparent from the following detailed description taken in conjunction with the accompanying drawings, in which:
FIG. 1 shows the brief construction of a conventional automobile steering system;
FIG. 2 is a lateral sectional view of a conventional rack-and-pinion gearbox;
FIG. 3a is a sectional view of an apparatus for automatically compensating for the clearance of a support yoke according to a preferred embodiment of the present invention; and
FIG. 3b partially magnifies part A shown in FIG. 3a.

### DETAILED DESCRIPTION OF THE PREFERRED EMBODIMENTS

Hereinafter, a preferred embodiment of the present invention will be described with reference to the accompanying drawings. In the following description and drawings, the same reference numerals are used to designate the same or similar components, and so repetition of the description on the same or similar components will be omitted.

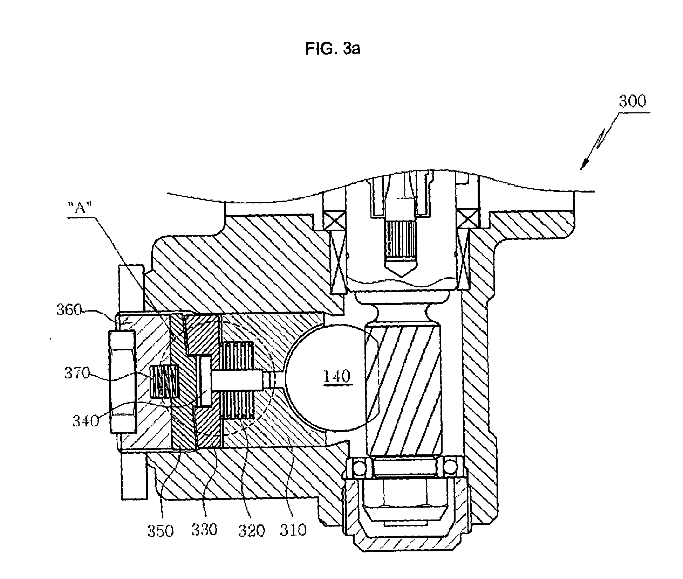

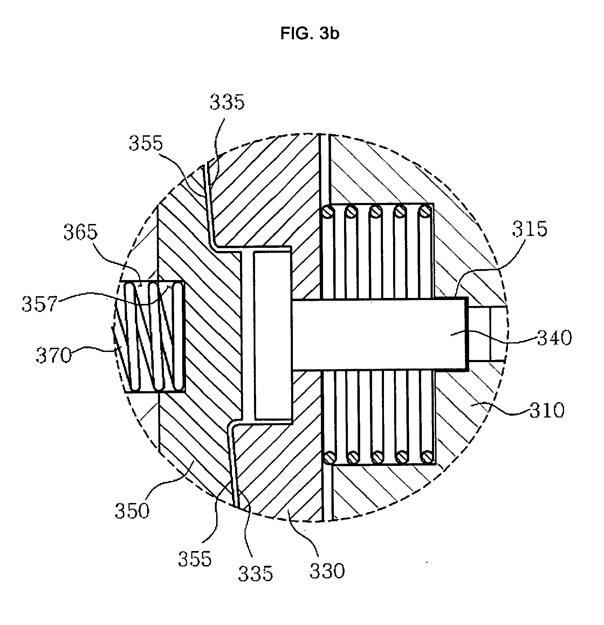

FIG. 3a is a sectional view of an apparatus for automatically compensating for the clearance of a support yoke according to a preferred embodiment of the present invention, and FIG. 3b partially magnifies part A shown in FIG. 3a.

An apparatus 300 for automatically compensating for the clearance of a support yoke according to a preferred embodiment of the present invention includes a support yoke 310; a yoke spring 320; a first cam 330; a fixing member 340; a second cam 350; a yoke plug 360; and a torsion spring 370.

The yoke plug 360 is of the same material and shape as conventional yoke plugs, except that it has a fixing recess 315 formed thereon so as to mount the fixing member 340. The yoke spring 320 is inserted into the back of a surface, which abuts a rack bar 140, and the first cam 330 is brought into coincidence therewith. Then, the fixing member 340 is mounted in the fixing recess 315 through the first cam 330.

The fixing member 340 is mounted in such a manner that a gap is created between the first cam 330 and the support yoke 310, just like a gap created between the yoke plug and the support yoke according to the prior art.

The first cam 330 has the shape of a cap having a through-hole formed at its center. The first cam 330 has a first slanted surface 335 formed on the back of its surface facing the support yoke 310, in the circumferential direction.

The second cam 350 has a second slanted surface 355 formed to match the first slanted surface 335 of the first cam 330. The first and second slanted surfaces 335 and 355 abut each other so that, when the second cam 350 rotates, they can move relative to each other in the leftward/rightward direction. The second cam 350 has a first recess 357 formed at the center of its rear surface.

The yoke plug 360 has a second recess 365 formed at the center of its front so that, when the apparatus 300 is completely assembled, a torsion spring 370 is positioned in a space defined by the first and second recesses 357 and 365.

Both ends of the torsion spring 370 are fixed to the second cam 350 and the yoke plug 360, respectively, so that, when a clearance is generated due to wear of the support yoke 310, for example, the torsion spring 370 is extended and rotates the second cam 350.

The rotation of the second cam 350 results in relative movement between the first and second slanted surfaces 335 and 355. As a result, the first cam 330, the fixing member 340, the yoke spring 320, and the support yoke 310 move towards the rack bar 140 as a whole and automatically compensate for the clearance.

As mentioned above, the apparatus according to the present invention is advantageous in that, unlike conventional apparatuses for reducing rattle noise resulting from the increased gap between the yoke plug and the support yoke, the inventive apparatus maintains a constant gap. In addition, the first cam, the second cam, and the torque spring automatically compensate for the clearance of the support yoke.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An apparatus for automatically compensating for a clearance of a support yoke in a rack-and-pinion steering system, the apparatus comprising:
a support yoke having a fixing recess;
a yoke spring for applying pressure to the support yoke towards a rack bar;
a first cam positioned on a rear surface of the support yoke so as to support the yoke spring, the fist cam having a first slanted surface formed on a surface opposite the yoke spring in a circumferential direction;
a fixing member mounted in the fixing recess so as to maintain a constant gap between the support yoke and the first cam while the yoke spring is inserted between the support yoke and the first cam;
a second cam for supporting the first cam, the second cam having a second slanted surface matching the first slanted surface, the second cam having a first recess formed on a central portion of a rear surface of the second slanted surface;
a yoke plug for supporting the second cam, the yoke plug having a second recess formed on a central portion of a surface supporting the second cam; and
a torsion spring positioned in a space defined by the first and second recesses, wherein
the torsion spring is adapted to extend, when the support yoke has generated a clearance, so that resulting rotation of the second cam and relative movement between the first and second cams compensate for the clearance.
